# EUROPEAN PATENT APPLICATION

(11) **EP 0 630 720 A1**
(43) Date of publication of application: **28.12.1994**
(21) Application number: 94304638.3
(22) Date of filing: 27.06.1994
(51) Int. Cl.: B23K 26/06

(54) **Optical system for laser beam generator**

(30) Priority: 25.06.1993 JP 155655/93
(71) Applicant: HONDA GIKEN KOGYO KABUSHIKI KAISHA, Minato-ku, Tokyo (JP)
(72) Inventor: Mouku, Minoru c/o K. K. Honda Gijutsu Kenkyusho, Saitama-ken (JP); Gunji, Takahiro c/o K. K. Honda Gijutsu Kenkyusho, Saitama-ken (JP); Fujita, Nobuyoshi c/o K. K. Honda Gijutsu, Saitama-ken (JP); Saito, Yuuji c/o K. K. Honda Gijutsu Kenkyusho, Saitama-ken (JP)
(74) Representative: Tomlinson, Kerry John

(57) **Abstract**

A laser beam generator for converging a laser beam (L) onto a surface of a workpiece (W), such as the inner surface of a cylindrical hole (H) or the outer surface of a cylindrical rod, to treat the surface has a cylindrical beam shaping mirror (1) disposed in a path of a laser beam (L). The cylindrical beam shaping mirror (1) has a plurality of successive conical taper surfaces (C) on an inner surface thereof for reflecting the laser beam into a plurality of ring-shaped laser beams and converging the ring-shaped laser beams into a cylindrical laser beam onto the surface (H) of the workpiece. The cylindrical beam shaping mirror is water-cooled by a water jacket (2) disposed therearound. The cylindrical laser beam has a uniform energy distribution which is effective to modify the surface of the workpiece, e.g. to quench the surface, for high resistance against fatigue.

## Description

The present invention relates to an optical system for use in a laser beam generator for applying a laser beam to a workpiece to heat-treat an inner cylindrical surface, e.g. the inner surface of a cylindrical hole, or an outer cylindrical surface, e.g. the outer surface of a cylindrical rod, of the workpiece, thereby to modify the surface, e.g. to quench or soft-nitride the surface.

For treating the inner surface of a hole defined in a workpiece with a laser beam, it has been customary to apply a defocused laser beam to the inner surface of the hole. However, the inner surface of the hole cannot be treated stably because the raw laser beam emitted from a laser does not have a uniform energy distribution and has an unstable irregular beam diameter.

One conventional device for converging a laser beam used to quench a workpiece is known from Japanese patent publication No. 57-47249, for example. The disclosed device has an internal reflecting mirror disposed in a path of a laser beam. The internal reflecting mirror has a reflecting surface for reflecting an outer circumferential portion of the laser beam into superimposed relationship to a core portion of the laser beam for thereby applying a laser beam having a uniform energy distribution or density to the surface of a workpiece which is positioned in a plane where the laser beam is focused.

The conventional laser beam converging device with such an optical system is effective to treat the surface of a planar workpiece in the focused plane with the laser beam thus generated. However, an attempt to treat the inner surface of a hole defined in a workpiece with the converged laser beam is inefficient since only the outer circumferential portion of the raw laser beam is superimposed on the core portion thereof.

It is therefore an object of the present invention to provide an optical system for a laser beam generator, which is capable of producing a cylindrical laser beam of uniform energy distribution.

According to the present invention, there is provided a laser beam generator for converging a laser beam onto a surface of a workpiece to treat the surface, comprising a mirror disposed in a path of a laser beam, the mirror having a plurality of successive conical taper surfaces on an inner surface thereof for dividing the laser beam into a plurality of ring-shaped laser beams and converging the ring-shaped laser beams onto the surface of the workpiece. The laser beam generator may also have a water jacket disposed around the mirror for water-cooling the mirror.

According to the present invention, there is also provided an optical system for converging a laser beam onto a surface of a workpiece to treat the surface, comprising a cylindrical beam shaping mirror having a plurality of inner conical mirror surfaces having respective different angles for reflecting a laser beam into a plurality of successive ring-shaped laser beams and superimposing the ring-shaped laser beams into a cylindrical laser beam to be converged onto the surface of the workpiece. The optical system may also have a water jacket disposed around the cylindrical beam shaping mirror for water-cooling the cylindrical beam shaping mirror.

The above and other objects, features, and advantages of the present invention will become apparent from the following description when taken in conjunction with the accompanying drawings which illustrate preferred embodiments of the present invention by way of example only.
FIG. 1 is a cross-sectional view of an optical system for a laser beam generator according to an embodiment of the present invention;
FIG. 2A, 2B, and 2C are diagrams showing the manner in which a laser beam is converged into a cylindrical shape;
FIG. 3 is a diagram showing the results of an experiment in which a workpiece is treated with a laser beam by the optical system shown in FIG. 1;
FIG. 4 is a schematic perspective view illustrative of a segment-mirror beam converging process;
FIG. 5 is a cross-sectional view of an optical system for a laser beam generator according to another embodiment of the present invention; and
FIG. 6 is an enlarged fragmentary cross-sectional view showing the manner in which laser beams are reflected again by the optical system shown in FIG. 5.

For heat-treating the surface of a workpiece with a laser beam to modify the surface, e.g. to quench or soft-nitride the surface, there is employed a carbon dioxide gas laser capable of continuously generating a laser beam of high output power. The carbon dioxide gas laser has a highest efficiency when the generated laser beam has a wavelength of about 10 µm (infrared radiation).

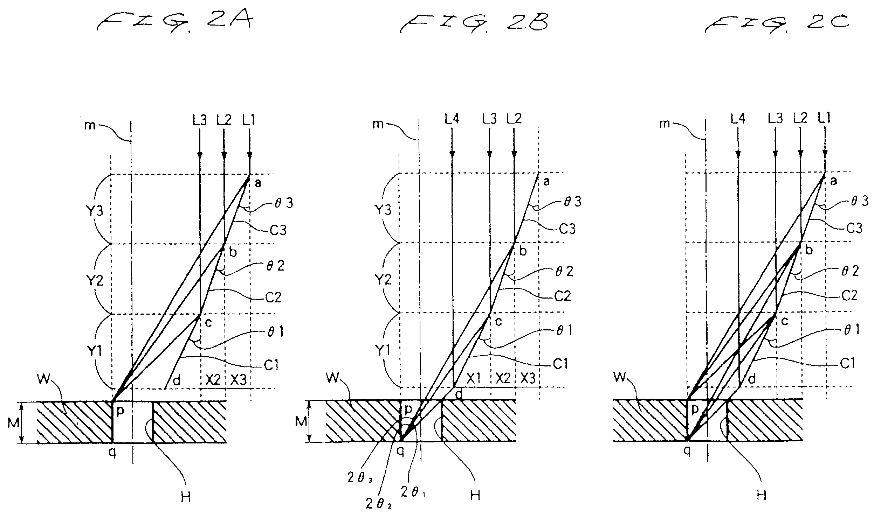

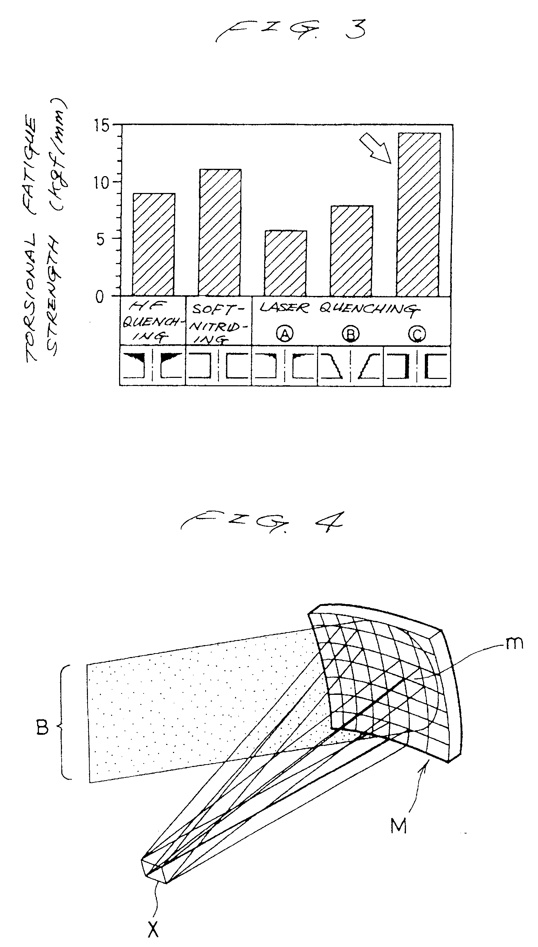

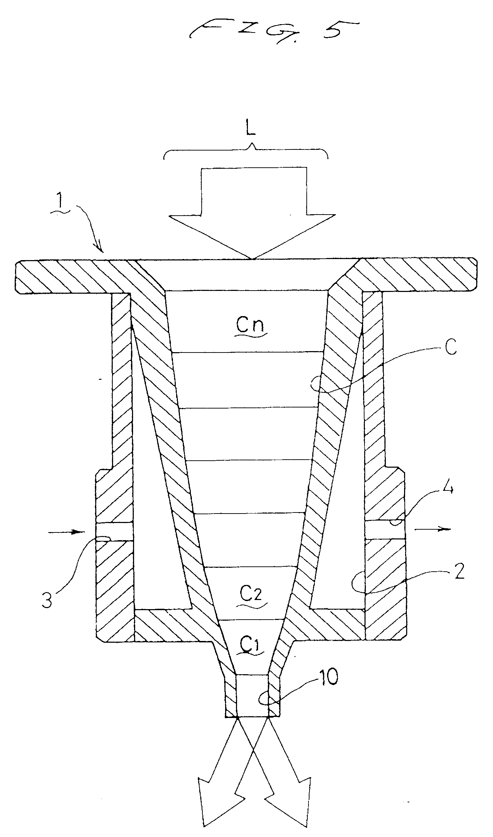

A laser beam used to cut or weld workpieces is required to have an increased energy density. However, a laser beam used to modify the surface of a workpiece is required to have a uniform energy distribution as well as an increased energy density. One form of achieving a uniform laser beam energy distribution is a segment mirror for dividing and converging a laser beam. As shown in FIG. 4, a segment mirror M comprises a number of mirror facets "m" having respective reflecting surfaces inclined at respective different angles. A raw laser beam B emitted from a laser is applied to the mirror facets "m" that divide the laser beam B into a number of laser beams, which are reflected and converged onto a desired focused plane X having a small area. The laser beam thus produced by dividing and converging the raw laser beam B has a uniform energy distribution.

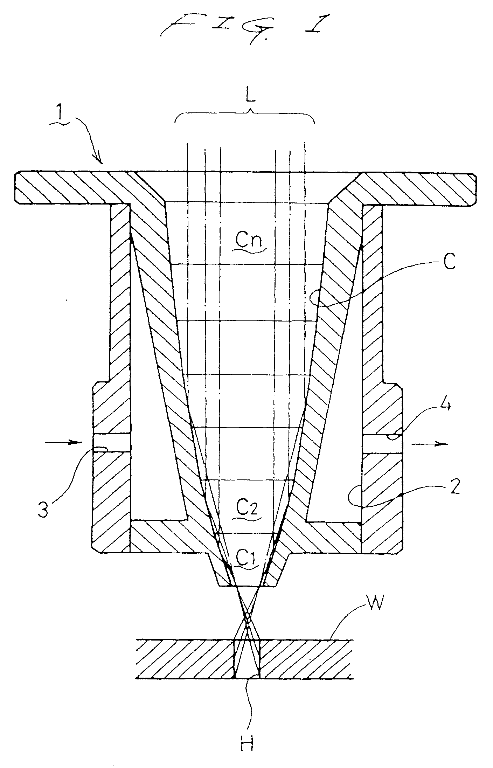

According to the present invention, as shown in FIG. 1, an optical system for use in a laser beam generator comprises an annular divided cylindrical beam shaping mirror 1 for converging a ring-shaped divided laser beam into a cylindrical shape in a cylindrical hole defined in a workpiece W. The annular divided cylindrical beam shaping mirror 1 is disposed in a path of a laser beam L emitted from a laser (not shown) for treating the workpiece W. The annular divided cylindrical beam shaping mirror 1 is produced by machining a block of oxygen-free copper or the like with a revolving diamond cutting tool on a lathe to form a number of successive conical taper surfaces C₁, C₂,..,Cn (also collectively referred to as "C") on an inner surface which have respective slightly different angles. A layer of gold, silver, or the like is evaporated onto the conical taper surfaces C to increase the reflectance thereof.

A process of determining the angles of the conical taper surfaces C of the annular divided cylindrical beam shaping mirror 1 will be described below with reference to FIGS. 2A through 2C. In FIGS. 2A through 2C, three successive conical taper surfaces C₁, C₂, C₃ on the right-hand side of the annular divided cylindrical beam shaping mirror 1 are shown, and parallel laser beams L₁, L₂, L₃, L₄ are applied to respective boundaries "a", "b", "c", "d" of the conical taper surfaces C₁, C₂, C₃. As shown in FIG. 2A, the laser beams L₁, L₂, L₃ (also collectively referred to as "L") are reflected by the boundaries "a", "b", "c", respectively, and converged onto a spot "p" in a cylindrical hole H defined in a work-piece W that is positioned below the conical taper surfaces C. Similarly, as shown in FIG. 2B, the laser beams L₂, L₃, L₄ are reflected by the boundaries "b", "c", "d", respectively, and converged onto a spot "q" in the cylindrical hole H.

It is assumed that, as shown in FIG. 2B, rectangular triangles formed in sectional side elevation by the respective conical taper surfaces C₁, C₂, C₃ have respective bases having lengths x₁, x₂, x₃ and respective heights Y₁, Y₂, Y₃, and that the cylindrical hole H in the workpiece W has a length M, with Y₁ > M, Y₂ > M, Y₃> M. The angles Θ₁, Θ₂, Θ₃ of the respective conical taper surfaces C₁, C₂, C₃ and hence the lengths x₁, x₂, x₃ and the heights Y₁, Y₂, Y₃ are determined such that the laser beams L₄, L₃, L₂ reflected by the conical taper surfaces C and converged onto the spot "q" have respective incident angles 2Θ₁, 2Θ₂, 2Θ₃ (Θ₁ > Θ₂ > Θ₃). A straight line passing through the spots "p", "q" in the cylindrical hole H in the workpiece W extends parallel to the laser beams L before they are reflected.

For the sake of brevity, no laser beams L are shown as being converged into the hole H between the spots "p" and "q" in FIGS. 2A through 2C. Actually, however, countless laser beams L applied between the laser beams L₁, L₂, L₃, L₄ are converged onto the line between the spots p" and "q".

Laser beams L which are reflected by the conical taper surfaces C on the left-hand side (not shown in FIGS. 2A through 2C) of the annular divided cylindrical beam shaping mirror 1 are converged into the hole H in a pattern symmetrical to the pattern on the line between the spots "p" and "q" with respect to a central axis "m" of the annular divided cylindrical beam shaping mirror 1. In this manner, the laser beams L which have an irregular or non-uniform energy distribution are divided into annular or ring-shaped laser beams by the conical taper surfaces C₁, C₂, .., Cn of the annular divided cylindrical beam shaping mirror 1, and the ring-shaped laser beams are superimposed into a smooth uniform ring-shaped converged laser beam which is cylindrical in shape.

The annular divided cylindrical beam shaping mirror 1 with the angles Θ₁, Θ₂, Θ₃ of the respective conical taper surfaces C₁, C₂, C₃ being thus determined is employed to heat-treat an inner cylindrical surface, e.g. the inner surface of the cylindrical hole H, or an outer cylindrical surface, e.g. the outer surface of a cylindrical rod, of the workpiece W, thereby to modify the surface, e.g. to quench or softnitride the surface. In such a heat-treatment process, the upper edge of the cylindrical hole H is aligned with the spot "p" where the laser beams L are focused, and the lower edge of the cylindrical hole H is aligned with the spot "q" where the laser beams L are also focused. Examples of the heat-treatment process which may be carried out include the quenching of the inner surface of an oil hole in a hollow shaft, a hollow crankshaft pin, or a journal to increase the resistance against fatigue in a high-speed range of rotation, the quenching of the inner surface of a guide hole for guiding a hydraulically operated pin, and the quenching of the inner surface of a guide hole for guiding a synchronizing pin.

As shown in FIG. 1, the optical system is of a direct water-cooled structure including a water jacket 2 which is disposed around the conical taper surfaces C of the annular divided cylindrical beam shaping mirror 1 integrally therewith. The water jacket 2 has a water inlet 3 for introducing water and a water outlet 4 for discharging water. When the laser beam L applied to the annular divided cylindrical beam shaping mirror 1 has an increased power, the heated conical taper surfaces C are cooled by the water in the water jacket 2. Therefore, the annular divided cylindrical beam shaping mirror 1 has a relatively high resistance against laser beam power and hence a relatively long service life. The number of the conical taper surfaces C₁, C₂, ..., Cₙ may be increased to reflect some of the laser beams L in a multiple fashion, so that the annular divided cylindrical beam shaping mirror 1 has an outer profile which is less liable to be arranged out of interference with the workpiece W. While the annular divided cylindrical beam shaping mirror 1 has a number of successive conical taper surfaces C for converging laser beams L into cylindrical laser beams, the annular divided cylindrical beam shaping mirror 1 may instead have a multiplicity of lenses for forming laser beams L into ring-shaped laser beams and converging them into a cylindrical shape.

The results of an experiment conducted to modify the surface of a workpiece W using the annular divided cylindrical beam shaping mirror 1 are shown in FIG. 3.

Conditions of the experiment:
- Material of the workpiece W:: a material corresponding to S48C;
- Test method:: torsional fatigue test;
- Treatment processes:: High-frequency quenching;
Soft-nitriding;
Laser quenching ...A*;
Laser quenching ...B*; and
Laser quenching ...C*.

- *: A, B:: the conventional process (lens-converged oblique radiation quenching)
- C:: the process carried out using the inventive optical system.

Since the process C is capable of quenching the workpiece W uniformly, the workpiece W treated according to the process C had a higher strength against torsional fatigue than the other processes A, B and the conventional high-frequency quenching and soft-nitriding processes.

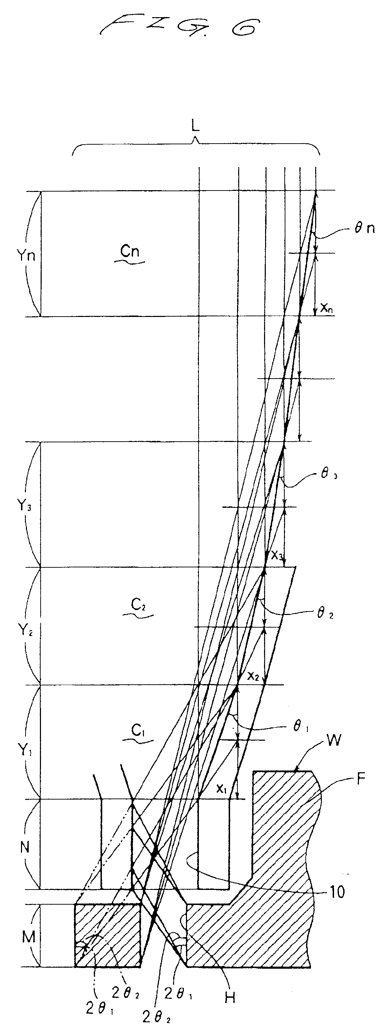

FIG. 5 shows an optical system for a laser beam generator according to another embodiment of the present invention. The optical system shown in FIG. 5 comprises an annular divided cylindrical beam shaping mirror 1 composed of a number of successive conical taper surfaces C₁,C₂,..., Cₙ (also collectively referred to as "C") on an inner surface which have respective slightly different angles, and a tubular member 10 joined to the lower distal end of the conical taper surfaces C. The tubular member 10 serves to reflect again the laser beams L which have been reflected by the conical taper surfaces C₁, C₂, ..., Cₙ to converge onto the surface of a cylindrical hole H defined in a workpiece W as shown in FIG. 6.

The angles Θ₁, Θ₂, Θ₃ of the respective conical taper surfaces C₁, C₂, C₃ and hence the lengths x₁, x₂, x₃ and the heights Y₁, Y₂, Y₃ of the triangles formed by the conical taper surfaces C₁, C₂, C₃ are determined in the same manner as with the embodiment shown in FIGS. 2A through 2C. The tubular member 10 has a length N (see FIG. 6) selected such that when a workpiece W having a flange F, such as around a crankshaft oil hole, is quenched, the conical taper surfaces C₁, C₂ will not contact the flange F. The optical system shown in FIG. 5 is also of a direct water-cooled structure including a water jacket 2 with a water inlet 3 and a water outlet 4 for directly cooling the conical taper surfaces C which have been heated by the applied laser beams.

The tubular member 10 is effective in preventing the conical taper surfaces C₁, C₂ from contacting the flange F of the workpiece W while the laser beams are converged into the hole H to quench the inner surface of the hole H for thereby modifying the surface.

Although certain preferred embodiments of the present invention has been shown and described in detail, it should be understood that various changes and modifications may be made therein without departing from the scope of the appended claims.

In the embodiments, each conic surface C₁-Cₙ reflects an annular portion of the laser beam L onto the inner surface of the hole H as a cylindrical ring of light. Each ring extends along the whole length of the hole H. The beam portions reflecting from the surfaces C₁-Cₙ are therefore superimposed on one another over the length of the hole H. It is also possible to arrange the conic surfaces C₁-Cₙ, so that some or all of the reflected cylindrical beams are not as long axially as the length of the hole H, and to arrange for these cylindrical beams to lie at suitable positions along the hole's length, so that the beams superimpose to form a desired radiation pattern, such as an even distribution of the light.

## Claims

1. A laser beam generator for converging a laser beam onto a surface of a workpiece to treat the surface, comprising:
a mirror disposed in a path of a laser beam, said mirror having a plurality of successive conical taper surfaces on an inner surface thereof for dividing the laser beam into a plurality of ring-shaped laser beams and converging the ring-shaped laser beams onto the surface of the work-piece.

2. A laser beam generator according to claim 1, further comprising a water jacket disposed around said mirror for water-cooling said mirror.

3. An optical system for converging a laser beam onto a surface of a workpiece to treat the surface, comprising:
a cylindrical beam shaping mirror having a plurality of inner conical mirror surfaces having respective different angles for reflecting a laser beam into a plurality of successive ring-shaped laser beams and superimposing the ring-shaped laser beams into a cylindrical laser beam to be converged onto the surface of the workpiece.

4. An optical system according to claim 3, further comprising a water jacket disposed around said cylindrical beam shaping mirror for water-cooling said cylindrical beam shaping mirror.

5. An optical system according to claim 3 or 4, wherein the beam shaping mirror has a tubular member at its exit along which the beams reflected from the conical mirrors further reflect before converging on the surface.

6. An optical system for converging a laser beam onto a surface of an object, comprising means for forming the laser beam into a plurality of ring-shaped laser beams and for superimposing the ring-shaped laser beams into a cylindrical laser beam to be converged onto the surface.

7. A method of treating an object with a laser beam, wherein the laser beam is converged onto a surface of the object using an optical system according to any of claims 3 to 6.

8. A method of treating a cylindrical surface of an object with a laser beam, wherein the beam is formed into a plurality of ring-shaped laser beams, and wherein these ring-shaped laser beams are converged onto the cylindrical surface in such a manner that they are superimposed upon one another.
